# EUROPEAN PATENT SPECIFICATION

(11) **EP 1 372 333 B1**
(45) Date of publication and mention of the grant of the patent: **02.07.2008**
(21) Application number: 03253644.3
(22) Date of filing: 10.06.2003
(51) Int. Cl.: H04N 1/00, H04H 1/00

(54) **Picture transfer between mobile terminal and digital broadcast receiver**
Bildübertragung zwischen einem mobilen Endgerät und einem digitalen Rundfunkempfänger
Procédé de transfert d'images entre un terminal mobile et un récepteur de radiodiffusion numérique

(30) Priority: 13.06.2002 US 170187
(43) Date of publication of application: 17.12.2003
(73) Proprietor: Nokia Corporation, 02150 Espoo (FI)
(72) Inventor: Wahlroos, Esa, 20810 Turku (FI); Elo, Timo, 20360 Turku (FI); Ikonen, Ari, 21280 Raisio (FI); Heikkilä, Tapani, 02710 Espoo (FI)
(74) Representative: Derry, Paul Stefan

(56) References cited:
- EP-A- 1 059 809
- EP-A- 1 180 903
- WO-A-01/65786
- WO-A-01/76154
- GB-A- 2 358 729
- "SyncML OBEX Binding" SYNCML, 15 June 2001 (2001-06-15), XP002241684

## Description

The invention relates to data transmission. More particularly, the invention relates to systems and methods for communicating between a mobile terminal and a display system.

It is common today for audio and visual programs to be broadcasted in digital formats such as DVB-S, DVB-C and DVB-T. The broadcasted signals are typically received at digital broadcast receivers (set-top boxes) and converted to television signals for transmission to televisions. Prior art digital broadcast receivers have standard operations and generate relatively standard user interface screens that users cannot customize.

Existing digital broadcast receivers have not taken advantage of the ease with which digital signals can be captured, stored, manipulated and retrieved. As a result, users have been limited in their ability to customize the operation of digital broadcast receivers. For example, when tuned to an audio channel on a conventional digital broadcast receiver, users sometimes view a blank screen or an alphanumeric description of the audio broadcast. Users have also been limited in their ability to customize user interface elements.

Further, existing digital broadcast receivers have not taken advantage of digital communications with terminal devices. Because digital broadcast receivers are able to process digital video and audio data, benefits can be gained by interfacing terminal devices with digital broadcast receivers. In particular, benefits are gained by interfacing with mobile terminal devices.

GB-A-2 358 729 discloses an eAlbum with a Bluetooth transceiver to exchange data between the eAlbum and Bluetooth enabled cameras and mobile phones. The eAlbum can be integrated in a digital set top box.

EP-A-1 180 903 a method for storing an image in a television receiver comprising the steps of: receiving at the television receiver a picture from a mobile terminal via a Bluetooth link and storing said picture into a memory module.

Therefore, there is a need in the art for digital broadcast receiver systems and methods that allow users to customize the operation of digital broadcast receivers. There is also a need in the art for digital broadcast receiver systems and methods that allow users to manipulate the data received at the receiver to customize the operation of receiver. Further, there is a need in the art for digital broadcast receiver systems and methods that interface with mobile terminal devices.

The above-mentioned needs in the art are satisfied by the disclosed systems and methods that allow users to transfer digital pictures and other data between digital broadcast receivers and other terminal devices.

In one embodiment of the invention, a method of storing an image in a digital broadcast receiver is provided. The method includes uploading a picture from a terminal device via a short-range communication link such as BLUETOOTH and saving the picture in a memory module of the digital broadcast receiver. In one aspect, the terminal device may already be connected to the digital broadcast receiver prior to transferring the picture. In another aspect, the terminal device is not connected prior to transferring the picture and therefore requests a connection.

According to another embodiment of the invention, the digital broadcast receiver displays on a television an interface related to communications with terminal devices. A user may interact with the digital broadcast receiver via a remote control using interface options displayed on the television. According to one aspect, connection information for terminal devices is shown on the television display. According to another aspect, picture information is shown on the television display. In accordance with a further aspect, pictures stored in the digital broadcast receiver may be displayed on the television.

In a further embodiment of the invention, a method for transferring a picture to a terminal device is provided. The picture may be one that is captured from a broadcast program received by a digital broadcast receiver. In yet another embodiment of the invention, a method is provided for communicating with a remote terminal device through a digital broadcast receiver and a local terminal device connected to the receiver and to the Internet.

In a further embodiment of the invention, a digital broadcast receiver includes a central processing unit and an interface module for coupling the receiver to a computer device. A memory module is also coupled to the central processing unit and contains computer-executable instructions for performing the steps related to the invention. According to aspects of the invention, the steps include storing, capturing and transferring pictures to terminal devices as part of an album computer application. According to one aspect, the steps include performing a call through a local terminal device connected to the Internet.

In other embodiments of the invention, computer-executable instructions for implementing the disclosed methods are stored on computer-readable media.

The present invention is illustrated by way of example and not limited in the accompanying figures in which like reference numerals indicate similar elements and in which:
Figure 1 shows a system that includes a digital broadcast receiver in accordance with an embodiment of the invention;
Figure 2 illustrates a method of capturing and utilizing picture frames in accordance with an embodiment of the invention;
Figure 3 illustrates a method of storing a picture on a digital broadcast receiver in accordance with an embodiment of the invention;
Figure 4 illustrates a method of sending a picture stored on a digital broadcast receiver to a mobile terminal according to an embodiment of the invention;
Figure 5 shows a display screen that includes a user interface in accordance with an embodiment of the invention;
Figure 6 shows a display screen that includes a picture stored on a digital broadcast receiver according to an embodiment of the invention;
Figure 7 shows a display screen that includes a user interface in accordance with an embodiment of the invention;
Figure 8 shows a display screen that includes a user interface for showing a list of mobile terminal devices connected to a digital broadcast receiver; and
Figure 9 illustrates a method of sending a call from a digital broadcast receiver via mobile terminal in communication with the Internet.

In the following description of the various embodiments, reference is made to the accompanying drawings which form a part hereof, and in which is shown by way of illustration various embodiments in which the invention may be practiced. It is to be understood that other embodiments may be utilized and structural and functional modifications may be made without departing from the scope of the present invention.

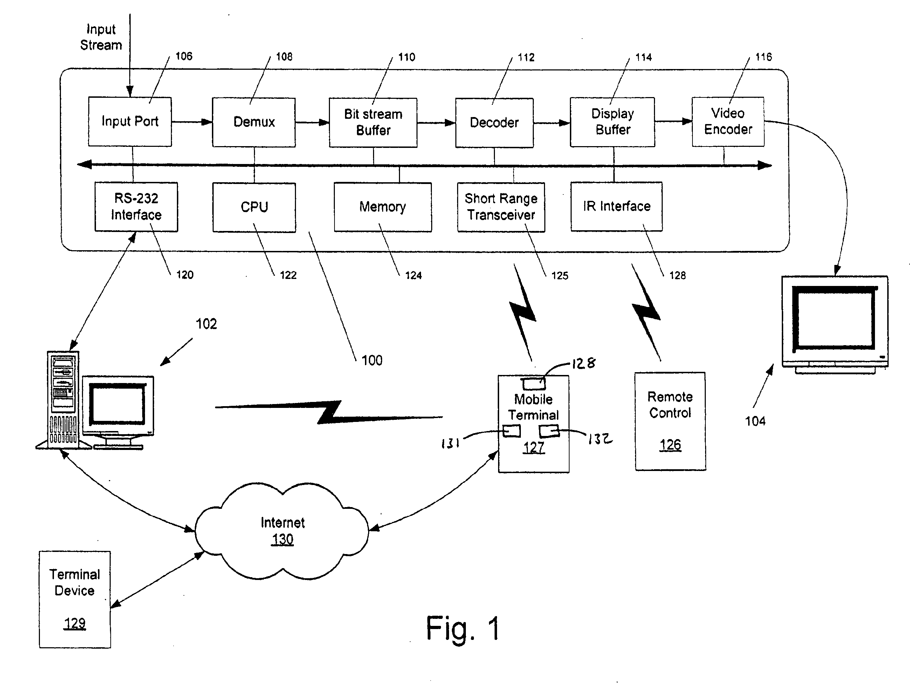

Figure 1 shows a system for receiving and processing digital video signals in accordance with an embodiment of the invention. A digital broadcast receiver (set-top box) 100 may be coupled to a computer device 102 and to a television 104. In alternative embodiments, television 104 may be replaced with a terminal, such as one attached to a telephone, personal digital assistant, pager or other device. Further, the digital broadcast receiver may be integrated with television 104 as a single unit. A digital input stream is received at the input port 106. The digital input stream may have a format such as DVB-S, DVB-C, DVB-T, MPEG-1, MPEG-2, MPEG-4 or ISO-IEC standards 11172-1, 11172-2 and 11172-3. The digital input stream may also use a format disclosed by the Bluetooth Special Interest Group. Any other digital transmission format may alternatively be used. Video and audio programs may be transmitted to digital broadcast receiver 100 over a variety of different frequencies and/or in a multiplexed manner over a single carrier. A demultiplexer 108 may be included to isolate a desired audio or video program from the input stream. The isolated program may then be sent to a bit stream buffer 110. Bit stream buffer 110 buffers data that is sent to a decoder 112. Decoder 112 may be included to decode or descramble signals broadcast in a compressed format such as in an MPEG-1 or MPEG-2 format. In one embodiment, the output of decoder 112 is a baseband signal. The baseband signal leaving decoder 112 may then be transmitted to display buffer 114 before being transmitted to a video encoder 116. Video encoder 116 may then convert the baseband signal to a format that can be used by a television, such as the National Television Standards Committee (NTSC) standard or the Phase Alternating Line (PAL) standard.

Digital broadcast receiver 100 also includes a short-range transceiver 125 for communicating with wireless devices within a wireless personal area network (WPAN). In a preferred embodiment, short-range transceiver 125 supports communications according to the WPAN specification known as "BLUETOOTH." Information about this specification may be obtained from the Bluetooth Special Interest Group at the website www.bluetooth.com. Through the WPAN, multiple mobile terminal devices may communicate with receiver 100 and with each other within a certain range. As shown in Figure 1, mobile terminal 127 can communicate with receiver 100 and with computer device 102 via the WPAN using a short-range transceiver 128 in the mobile terminal 127. Further, mobile terminal 127, e.g., a handheld mobile terminal, and computer device 102 may be connected to the Internet. Receiver 100 may connect to the Internet via computer device 102. It may also be directly connected to the Internet, and as discussed later, it may access the Internet via mobile terminal 127. Mobile terminal 127 may also include a processor 131 for controlling operations of the mobile terminal according to computer executable instructions stored in memory 132. Alternatively, some or all of mobile terminal's computer readable instructions may be embodied in hardware or firmware (not shown).

The digital broadcast receiver 100 may also include an interface 120 for coupling the receiver to computer device 102 or other devices. An RS-232 interface may be utilized to provide a standard interface for connecting to additional devices. Of course, other interfaces, such as USB or IEEE 1394 interfaces may also or alternatively be included (not shown). A central processing unit (CPU) 122 may be included to control the overall operation of digital broadcast receiver 100. Computer executable instructions and data used by CPU 122 and other components within digital broadcast receiver 100 may be stored in a memory 124. Memory 124 may be implemented with any combination of read only memory modules or random access memory modules, optionally including both volatile and non-volatile memory.

A user may control the operation of digital broadcast receiver 100 with a remote control 126. A conventional infrared (IR) interface 128 may be included to receive information from the remote control 126. A remote terminal device 129 may connect to the mobile terminal 127, the computer 102, or the receiver 100 via the Internet 130 or any other network, discussed in more detail below.

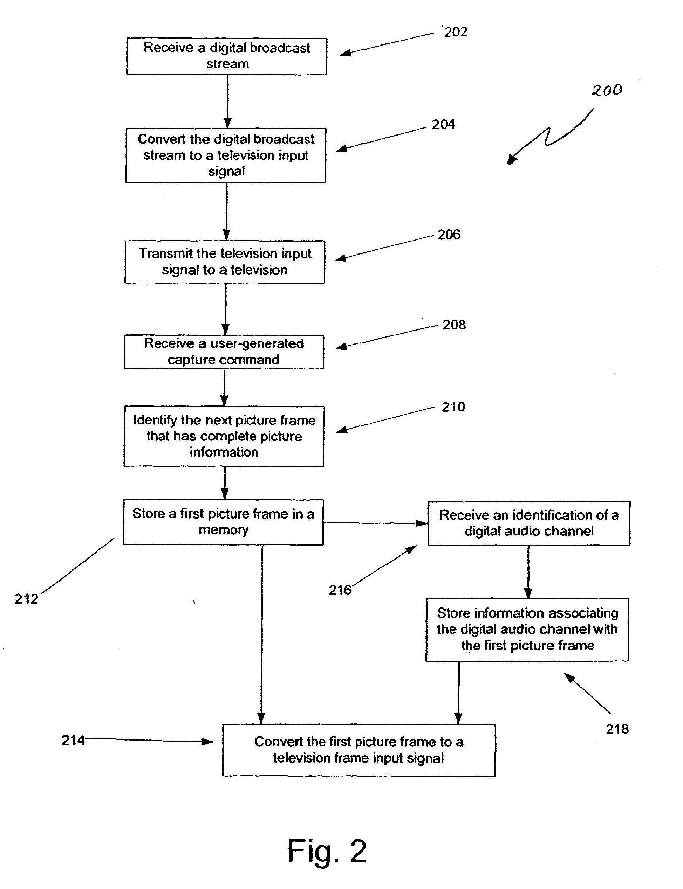

A method for customizing the operation of the digital broadcast receiver in accordance with an embodiment of the invention is shown in Figure 2. In particular, Figure 2 illustrates a method 200 for capturing an image from a television, computer monitor or other device. First, in step 202, a digital video stream is received at a digital broadcast receiver. The digital video stream may be received from a cable television provider, satellite television provider or other source of digital video and/or audio programming (e.g., a HDTV broadcast). Next, in step 204 the digital video stream is converted to a television input signal.

The conversion may include transforming an MPEG-2 or other digital signal into an NTSC or PAL signal. Such conversion circuits and software are well-known to those skilled in the art.

The television input signal is then transmitted to a television or other device(s) in step 206. While viewing the television program, the user may see a picture that the user would like to store as a background screen for the television or other use for any other device (e.g., computer device). The user may make a selection with the remote control 126, on an interface of digital broadcast receiver 100, from a mobile phone or mobile terminal, computer terminal, or other device to capture the picture. After receiving a capture command in step 208, the digital video stream is monitored and the next picture frame that has complete picture information is identified in step 210. When the digital video stream is in MPEG format, the stream contains I, P and B picture frames. In one variation, only the I picture frames form complete pictures that can be used as background images. P and B frames contain only a portion of the information needed to form a complete image. Step 210 may include monitoring the digital video stream to identify the next I picture frame and may be performed by decoder 112.

After a proper picture frame is identified, in step 212 the picture frame is stored in a memory, such as memory 124. The memory may be a non-volatile or, alternatively, a volatile memory. The picture frame may be retrieved from memory 124 and transmitted to display buffer 114 or video encoder 116 to be displayed on television 104, a computer monitor through a computer interface, or on any other connected display device. Video encoder 116 may convert the picture frame to a television frame input signal in step 214. The picture frame may be displayed on a television at times determined by the user. In one embodiment, the picture frame is displayed on the television while the user listens to audio programming. As shown in figure 2, in step 216, digital broadcast receiver 100 may receive the identification of a digital audio channel. The user may perform step 216 by making an appropriate selection with remote control 126 (or other control device as described above with respect to the capture command). Then in step 218, information associating the digital audio channel with the picture frame may be stored in a memory, such as memory 124. The association may be in the form of computer-executable instructions causing the picture frame to be retrieved from the memory when digital broadcast receiver 100 is tuned to the identified audio channel. In one embodiment, the user may view prompts on a television screen instructing the user to enter information to make the association. A captured frame may optionally be associated with more than one audio channel, e.g., the frame may be specified for use as a background when any audio channel is selected.

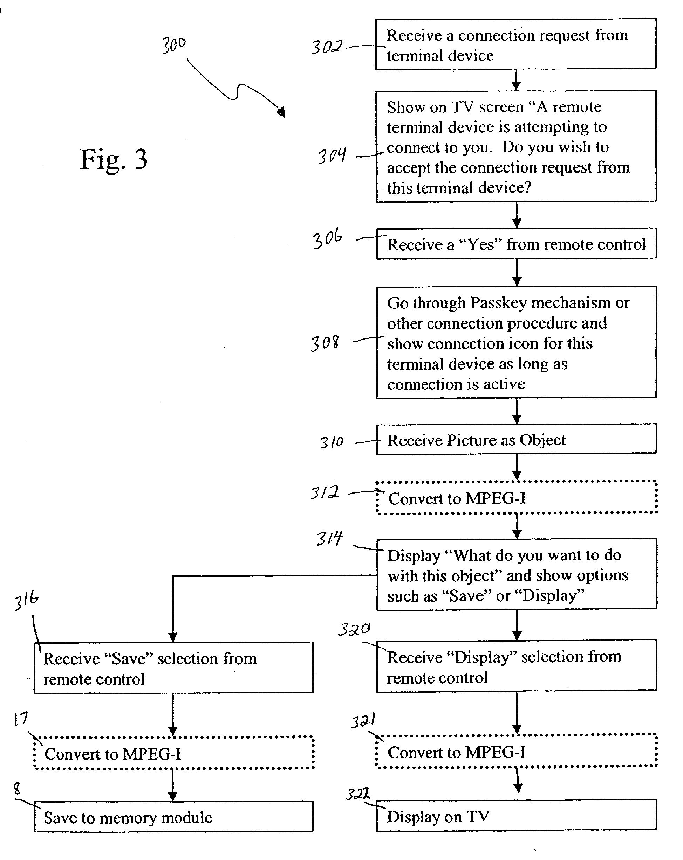

A method for customizing the operation of the digital broadcast receiver 100 in accordance with another embodiment of the invention is shown in Figure 3. In particular, Figure 3 illustrates a method 300 for uploading an image from a mobile terminal, such as mobile terminal 127. According to method 300, a user of mobile terminal 127 (mobile terminal 127 being, e.g., a digital camera-phone such as a Nokia 7650 mobile terminal, manufactured by Nokia Corporation of Finland), may desire to send a photograph stored on mobile terminal 127 to receiver 100. As such, if terminal 127 is not connected to receiver 100, it initially sends a connection request that is received in step 302 at receiver 100. In response to receiving the connection request, receiver 100 in step 304 sends a display message to TV 104 to display the text "A remote terminal device is attempting to connect to you. Do you wish to accept the connection request from this terminal device?" or similar text. The name of the device may also be shown. The user may respond using remote control 126, or via direct input to receiver 100. He may also respond via mobile terminal 127 or through other means via computing device 102.

After receiver 100 receives an affirmative response from the user in step 306, it goes through a connection procedure according to the applicable WPAN specification in step 308. In a BLUETOOTH scenario, both terminal 127 and receiver 100 authenticate one another and create a domain of trust. Such authentication may include writing the same passkey to each other, and if the keys match, both terminal 127 and receiver 100 are paired and bonded together. As such, data transferred between these devices may now be encrypted. The passkey mechanism may only be required the first time when an unknown device tries to make a connection to receiver 100.

In accordance with the BLUETOOTH specification, the picture stored on terminal 127 is formatted as an OBEX-file and transferred to receiver 100. The connection with terminal 127 is preferably terminated after the file is transferred. After receiver 100 in step 310 receives the OBEX-file, it may convert the OBEX-file in step 312 to a display format, such as MPEG I-frame. Upon reception of the OBEX-file, in step 314 receiver 100 may send a display message to TV 104 to display the message "What do you want to do with this object?" or similar message. Options are also preferably displayed, such as "Save" and "Display." If the user selects the "Save" option, when the receiver 100 in step 316 receives the "Save" command, the receiver in step 318 saves the picture in memory module 124. Prior to saving the picture, the OBEX-file may be converted in step 317 to another format, such as MPEG I-frame, if it has not been converted earlier (e.g., in step 312). Alternatively, if the user selects the "Display" option, when the receiver 100 receives such a command, the receiver in step 322 sends instructions to TV 104 to display the picture. If the OBEX-file for the picture has not previously been converted to a display format, the receiver 100 in step 321 converts the OBEX-file prior to sending display instructions to TV 104.

The display format may include an identifier to one or more locations or applications to which the image corresponds. Thus the user can from his terminal determine in which location or application (e.g., album, background, selected radio stations, display grid, location within the user interface, etc.) of the display or receiver he wants the picture to be forwarded or stored. The terminal may provide alternatives for applications or locations as above e.g. using an advanced "Display" option.

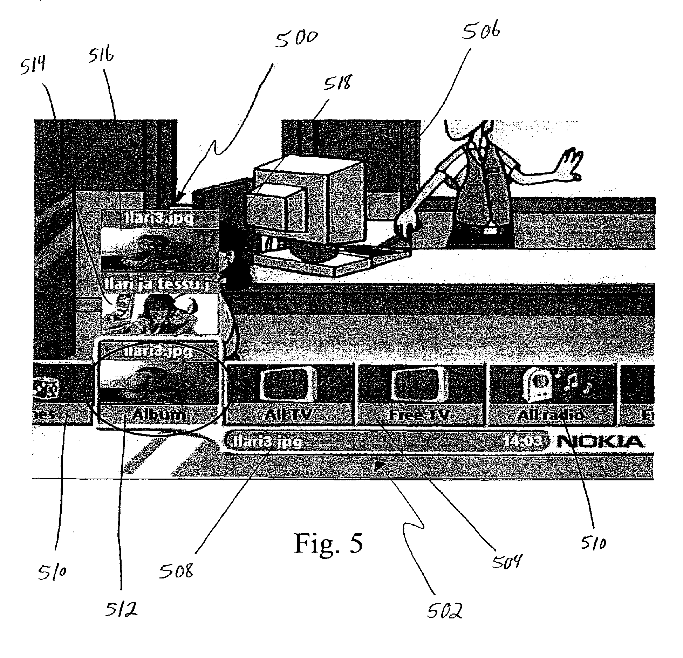

Images stored in receiver 100 according to a further embodiment are stored in an album (not shown) maintained in memory module 124. Accordingly, images or pictures may be saved to one or more folder structures (not shown) within the album. The album provides an easy interface for a user to choose images to display, delete, send, etc. It may further allow a user to rename images, change their order, or modify the images. It may also allow a user to set up a slide show and to control the display of the images via remote control 126 or another device, such as terminal 127. To provide interaction with a user via remote control 126, receiver 100 may send messages to display an album interface on TV 104. As shown in Figure 5, album interface 500 may be part of an overall receiver interface 502, e.g., control bar 504. In one embodiment, the receiver interface 502 is displayed over a video image display 506, such as a television display. The receiver interface 502 may include a text area 508 that displays text messages, and sub-interface icons 510 that represent other interfaces and options for interacting with receiver 100.

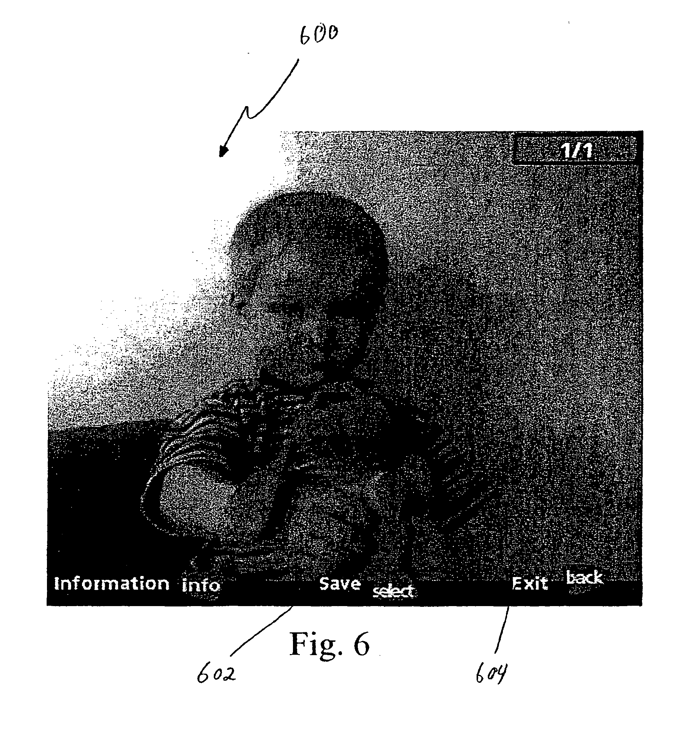

Figure 5 further illustrates an album icon 512 formed from a thumbnail version of a picture stored in memory 124. According to one embodiment, when the album icon 512 is selected, a folder icon 514 representing other pictures, and a picture icon 516 representing a single picture, are displayed in a vertical control bar 518. The vertical control bar 518 can display more or fewer icons depending on the pictures and folders stored in memory 124 and according to the set up of the album, screen size, and like considerations. Within the icons there may be textual information presented, such as the name of the figure as can be seen in icons 514 and 516. Further, controls for taking actions related to the pictures may be shown. According to one embodiment, when a picture icon, such as icon 516, is selected, the picture associated with icon 516 is displayed on TV 104. Figure 6 shows the display 600 of a picture associated with icon 516. As shown, display 600 may include options for taking actions associated with the picture. For example, a "Save" option 602 to save the picture or "Exit" option 604 to close the picture display may be shown. Other options may also or alternatively be used, e.g., options to send the picture, modify the picture, rename the picture, etc.

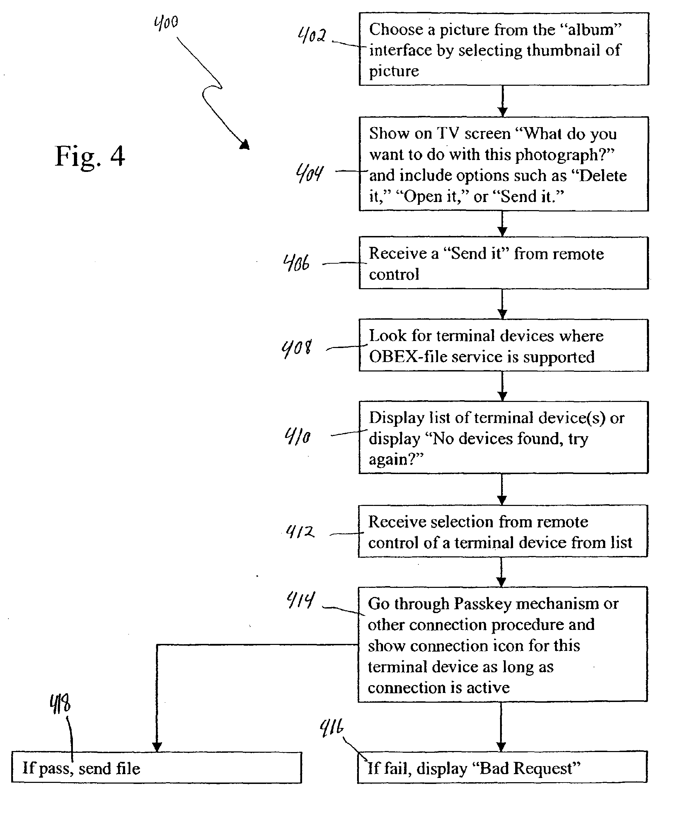

Referring back to Figure 4, a method 400 for sending a picture stored in receiver 100 according to an illustrative embodiment is shown. Suppose for example that a user of receiver 100 desires to send a picture stored on the receiver to mobile terminal 127. Suppose also that the mobile terminal 127 is an unknown device to the receiver 100. Suppose further that the picture is stored in an album stored in the receiver 100. The method 400 begins in step 402 when the user selects an album interface by selecting an album icon (e.g., icon 512 in Figure 5) displayed on TV 104. The album icon may include a thumbnail version of a picture stored in memory module 124. If the album contains more than one image, the user may further select one or more images in the selected album.

In response to receiving the user selection of one or more images, the receiver 100 in step 404 may send instructions to TV 104 to display action option icons and a message such as "What do you want to do with this/these photograph(s)?" requesting an action from the user. The option icons in this scenario may include icons to delete, open, rename, and/or send the image(s), etc. Upon user selection of, for example, a "Send it" icon, receiver 100 in step 406 receives a send message from remote control 126. Because the picture according to the BLUETOOTH specification is sent as an OBEX file, receiver 100 in step 408 looks for terminal devices that support OBEX files.

The connection formation is performed according to the principles of Specification Of The Bluetooth System, Volumes 1 and 2, Core and Profiles: Version 1.1 February 22, 2001, which describes the principles of BLUETOOTH device operation and communication protocols. The operation, generally, includes: first, the receiver 100 sends Inquiry messages via the short range transceiver 125 and if one or more devices are found, the short range transceiver 125 subsequently sends Paging messages. After receiving one or more Page Responses from the one or more other devices, a BLUETOOTH connection can be established and the receiver 100 may ask whether any of the connected devices support Generic Object Exchange Profile (GOEP) and file transfer synchronization using the Object Exchange OBEX Standard. The OBEX standard is specified by the Infrared Association (irDA), Object Exchange Protocol, Version 1.2. The OBEX Standard was adopted by Bluetooth as a binary HTTP protocol that allows multiple request/response exchanges. The queries for GOEP and OBEX support are performed in Bluetooth Service Discovery Protocol (SDP), which defines the investigation of services available to a BLUETOOTH unit from other units. After receiving OBEX-support indications from the one or more other devices, the receiver 100 in step 410 sends a message to display a list of such devices. If no devices supporting OBEX are found, receiver 100 in step 410 sends a message to display the message "No supporting devices found, try again?" or a similar message.

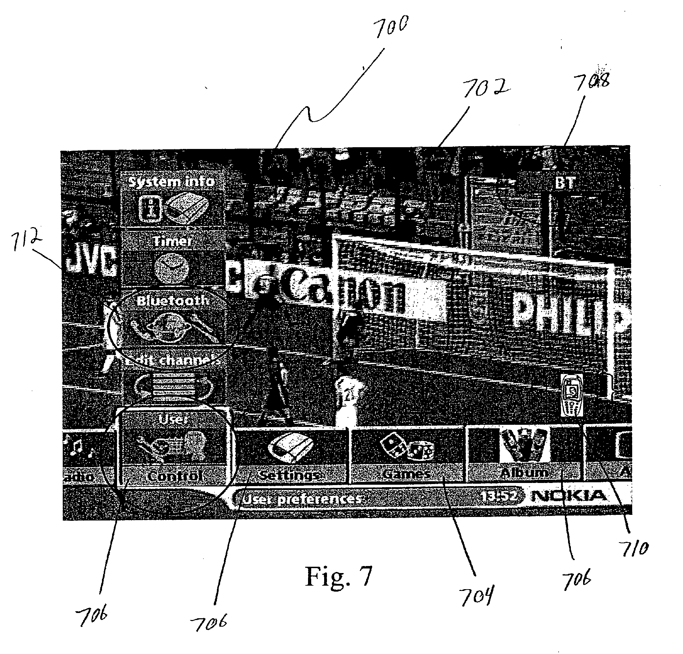

When receiver 100 locates a number of applicable devices (i.e., devices that support OBEX-files) and therefore displays a list of the devices in step 410, the list may show each device according to a nickname given previously. Suppose mobile terminal 127 is on the list and the user selects it in step 412 via remote control 126. Upon reception of the user's selection, receiver 100 and terminal 127 go through authentication mechanisms as described previously including, e.g., using a passkey mechanism. If the authentication fails, receiver 100 in step 416 sends display instructions to display the message "Bad Request." If authentication is successful, receiver 100 in step 418 sends the OBEX-file for the selected picture to terminal 127. When the transmission is complete, the connection is preferably terminated. While the connection is active, a connection icon (e.g., icon 710 in Figure 7) is preferably displayed on TV 104.

Referring now to Figure 7, an interface 700 according to an illustrative embodiment for interacting with receiver 100 is shown. The interface 700 generally includes a video portion 702, a navigation bar 704 with interface options 706, a BLUETOOTH activity indicator 708, and a connection icon 710. Receiver 100 according to one embodiment is able to send video display signals along with permitting a user to interact with receiver 100 via interface 700. Interface options 706 shown on navigation bar 704 correspond to various systems and methods for interacting with the receiver 100. As shown, one interface option 706 includes control options for controlling the receiver 100 and the associated system. For example, one control option 712 relates to BLUETOOTH devices connected to the receiver 100. BLUETOOTH activity indicator 708 may be shown to indicate that the BLUETOOTH system is active. If it is disabled, activities requested that relate to BLUETOOTH devices will result in the receiver 100 instructing TV 104 to display a message indicating that BLUETOOTH is not active, e.g., the message "Bluetooth is not activated. Do you want to activate it now?" While a BLUETOOTH device is connected to the receiver 100, a connection icon 710 may be shown to indicate the connection.

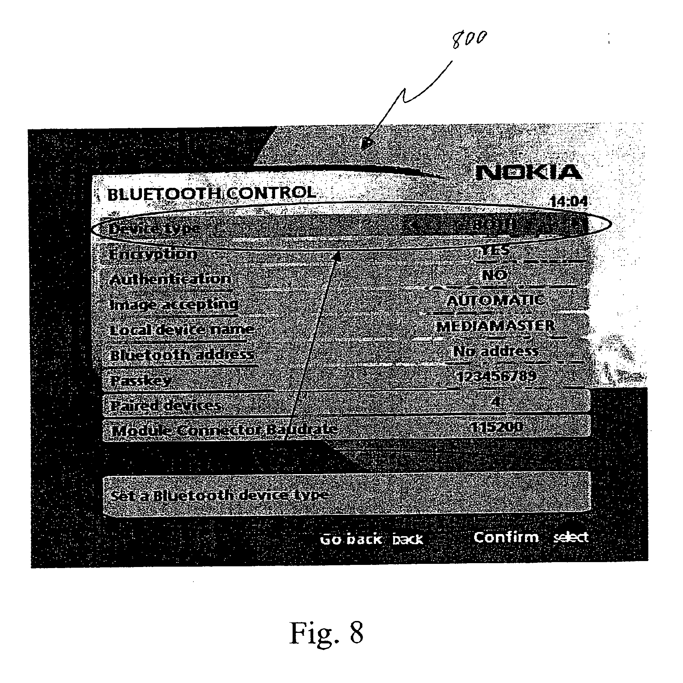

Suppose BLUETOOTH is active and mobile terminal 127 is currently connected as indicated by icons 708 and 710. If a user selects interface option 706 and then selects BLUETOOTH control option 712, a command interface 800 shown in Figure 8 may be displayed according to instructions from receiver 100. The command interface 800 provides status information about known BLUETOOTH devices.

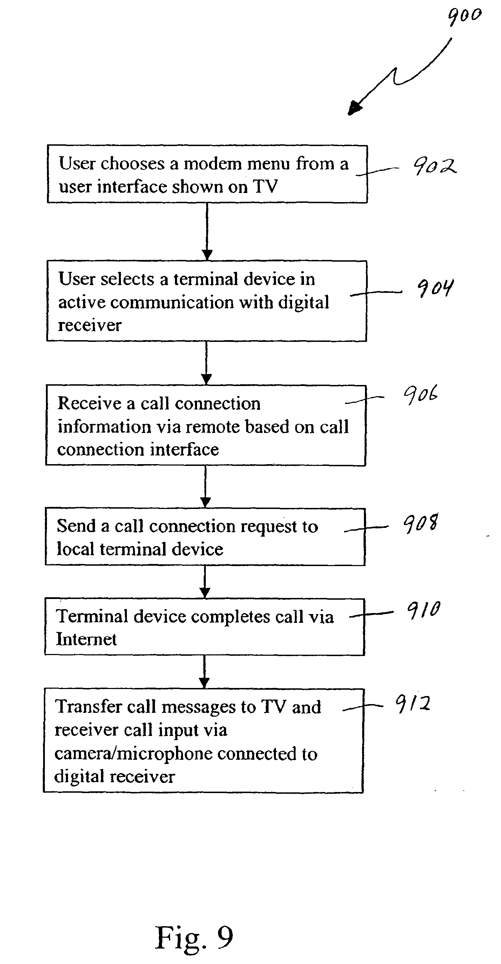

Referring now to Figure 9, a method 900 of sending a call from receiver 100 via terminal 127 according to one embodiment of the invention is shown. Suppose that a user desires to make an Internet call using receiver 100 in combination with TV 104, but that receiver 100 is not directly connected to the Internet. Suppose further that computing device 102 is not connected to the Internet. The user can make the Internet call using WPAN connectivity with terminal 127, which is connected to the Internet. As such, the user in step 902 chooses a modem menu (not shown) from a user interface that receiver 100 instructs to be displayed on TV 104. In response to the user's selection, receiver 100 sends display instructions showing that terminal 127 is connected and available for such a call. The user in step 904 subsequently selects terminal 127 and is prompted by receiver 100 for call connection information, such as a dialing number, web address, URL, etc. The user inputs the requested information in step 906. After inputting call connection information, the user selects a "call" button to request call connection processing. Upon reception of call connection information from the user, receiver 100 in step 908 sends a call connection request to terminal 127.

Terminal 127 in step 910 completes the Internet call via its connection with the Internet 130. Call completion can be accomplished using session initiation protocol (SIP) messaging and session description protocol (SDP) messaging, or other call completion protocols and methods as are known in the art. Once the call session is initiated, terminal 127 in step 912 transfers call messages received via its WPAN connection with receiver 100. Receiver 100 is then able to send display messages to TV 104 and receive user input via remote control 126. In another embodiment, other user input devices are also connected to receiver 100 for interacting with the call messages. Suppose for example that the user called a remote terminal device 129 (also in communication with the Internet 130) and desires to communicate using two-way audio and video messages. A camera (not shown) and a microphone (not shown) may be attached to the receiver 100 to enable such communication. A user may then be able to interact via audio and video inputs with another user interacting with remote terminal device 129.

In further embodiments, computer device 102 may be connected to a wide area network such as the Internet 130 to obtain icons, background images and audio and video clips. Computer device 102 and/or digital broadcast receiver 100 may also be connected to other input devices, such as scanners, cameras and MP3 players. Video and audio data may also be transferred from digital broadcast receiver 100 to computer device 102. Computer device 102 may use the video and audio data to customize user interface screens, backgrounds, screen savers, add sound to computer device events or otherwise customize the computer device. Computer device 102 may also convert the video and audio data to other formats and transmit the data to other entities connected to the Internet 130 (e.g., as attachments to e-mail messages).

While the invention has been described with respect to specific examples, those skilled in the art will appreciate that there are numerous variations and permutations of the above described systems and techniques that fall within the spirit and scope of the invention as set forth in the appended claims. For example, one or more of the components shown within digital broadcast receiver 100 may be located within one or more other devices, such as a television. Moreover, the disclosed methods may be implemented as computer-executable instructions recorded on a computer readable medium such as a floppy disk or CD-ROM.

## Claims

1. A method of operating a digital broadcast receiver comprising a memory module, the method comprising:
(a) receiving at the digital broadcast receiver a picture from a mobile terminal device via a short range wireless communication link;
(b) storing the picture into the memory module;
(c) receiving a digital broadcast input stream comprising a plurality of transmission channels;
(d) receiving user input associating the picture with one or more of the transmission channels;
(e) retrieving the picture for display on a display device when the receiver is tuned to one of the transmission channels associated with said picture; and
(f) outputting a formatted output video signal based on the picture for displaying on the display device when the receiver is tuned to one of the transmission channels associated with the picture.

2. The method of claim 1, wherein the short-range wireless communication link comprises a BLUETOOTH link.

3. The method of claim 1 or claim 2, wherein step (a) comprises the steps of:
(1) receiving a connection request from the mobile terminal device;
(2) sending to the display device a signal to display an indication of the connection request from the terminal;
(3) receiving a user-generated assent for the connection request;
(4) establishing a connection between the digital broadcast receiver and the mobile terminal device; and
(5) receiving the picture from the mobile terminal device.

4. The method of claim 3, wherein step (a) further comprises the steps of:
(6) sending to the display device a signal to display options associated with the picture, the options comprising an option for saving the picture to the memory module; and
(7) in response to (6), receiving a user-generated selection of one of the options.

5. The method of any of claims 3 to 4, further comprising the step of converting the picture into a digital image formatted into an MPEG I-frame.

6. The method of any of claims 3 to 5, wherein the picture received from the mobile terminal device comprises an MPEG I-frame.

7. The method of any of claims 3 to 5, further comprising the step of (6) as long as the mobile terminal device maintains a connection with the digital broadcast receiver, sending to the display device a signal to display an icon representing connection with the mobile terminal device.

8. The method of claim 1 or claim 2, wherein step (b) comprises the step of converting the picture into a digital image formatted into an MPEG I-frame.

9. The method of any preceding claim, further comprising the steps of:
receiving at the digital broadcast receiver a second picture from a terminal device via a wired communication link;
storing the second picture into the memory module.

10. The method of any preceding claim, wherein step (b) comprises the step of storing the picture in an album maintained within the memory module.

11. The method of claim 10, further comprising the step of sending to a display device connected to the digital broadcast receiver a signal to display an icon representing the album on a user interface.

12. The method of claim 11, further comprising the steps of:
receiving a user-generated selection of the album icon; and
sending to the display device a signal to display options associated with pictures stored in the album.

13. The method of any preceding claim, wherein the one or more associated transmission channels comprise audio channels.

14. Computer-executable instructions which when executed by computer apparatus control it to perform the method of any preceding claim:

15. A computer-readable medium storing the computer-executable instructions according to claim 14.

16. A digital broadcast receiver comprising:
a central processing unit (122);
a video encoder (116); and
a memory module (124) coupled to the central processing unit and containing computer-executable instructions that cause the receiver to perform the steps of:
(a) receiving a picture from a mobile terminal device (127) via a short-range wireless communication connection;
(b) storing the picture into the memory module;
(c) receiving a digital broadcast input stream comprising a plurality of transmission channels;
(d) receiving user input associating the picture with one or more of the transmission channels;
(e) retrieving the picture for display on a display device when the receiver is tuned to one of the transmission channels associated with said picture; and
(f) outputting at the video encoder a formatted output video signal based on the picture for displaying on the display device when the receiver is tuned to one of the transmission channels associated with the picture.

17. The digital broadcast receiver of claim 16, wherein the memory module comprises further computer-executable instructions that cause the receiver to perform further steps of:
(g) sending to the display device a signal to display options associated with the picture, the options comprising an option for saving the picture to memory; and
(h) in response to (g), receiving a user-generated selection of one of the options.

18. The digital broadcast receiver of claim 16 or 17, wherein the short-range transceiver comprises a Bluetooth transceiver.

19. The digital broadcast receiver of any of claims 16 to 18, wherein the one or more associated transmission channels comprise audio channels.

## Patentansprüche

1. Verfahren zum Betreiben eines digitalen Rundfunkempfängers, der ein Speichermodul aufweist, wobei das Verfahren aufweist:
(a) Empfangen am digitalen Rundfunkempfänger eines Bildes von einer mobilen Endgeräteeinrichtung über eine drahtlose Nachbereichskommunikationsverbindung;
(b) Speichern des Bildes im Speichermodul;
(c) Empfangen eines digitalen eine Vielzahl von Übertragungskanälen aufweisenden Rundfunkeingabestroms;
(d) Empfangen einer Anwendereingabe, die das Bild einem oder mehreren der Übertragungskanäle zuordnet,
(e) Abrufen des Bildes zum Anzeigen auf einer Anzeigeeinrichtung, wenn der Empfänger auf einen der dem Bild zugeordneten Übertragungskanäle eingestellt ist; und
(f) Ausgeben basierend auf dem Bild eines formatierten Ausgabevideosignals zum Anzeigen auf der Anzeigeeinrichtung, wenn der Empfänger auf einen der dem Bild zugeordneten Übertragungskanäle eingestellt ist.

2. Verfahren gemäß Anspruch 1, wobei die drahtlose Nahbereichskommunikationsverbindung eine BLUETOOTH-Verbindung aufweist.

3. Verfahren gemäß Anspruch 1 oder 2, wobei Schritt (a) die Schritte aufweist:
(1) Empfangen einer Verbindungsanforderung von der mobilen Endgeräteeinrichtung;
(2) Senden an die Anzeigeeinrichtung eines Signals, um einen Hinweis auf die Verbindungsanforderung vom Endgerät anzuzeigen;
(3) Empfangen einer anwendererzeugten Zustimmung für die Verbindungsanforderung;
(4) Aufbauen einer Verbindung zwischen dem digitalen Rundfunkempfänger und der mobilen Endgeräteeinrichtung; und
(5) Empfangen des Bildes von der mobilen Endgeräteeinrichtung.

4. Verfahren gemäß Anspruch 3, wobei Schritt (a) weiter die Schritte aufweist:
(6) Senden an die Anzeigeeinrichtung eines Signals, um dem Bild zugeordnete Optionen anzuzeigen, wobei die Optionen eine Option zum Speichern des Bildes im Speichermodul umfassen; und
(7) in Reaktion auf (6), Empfangen einer anwendererzeugten Auswahl einer der Optionen.

5. Verfahren gemäß einem der Anspruch 3 bis 4, weiter aufweisend den Schritt des Konvertierens des Bildes in ein digitales als ein MPEG-I-Rahmen formatiertes Bild.

6. Verfahren gemäß einem der Ansprüche 3 bis 5, wobei das von der mobilen Endgeräteeinrichtung empfangene Bild einen MPEG-I-Rahmen aufweist.

7. Verfahren gemäß einem der Ansprüche 3 bis 5, weiter aufweisend den Schritt (6) so lange wie die mobile Endgeräteeinrichtung eine Verbindung mit dem digitalen Rundfunkempfänger aufrecht hält, Senden an die Anzeigeeinrichtung eines Signals, um ein eine Verbindung mit der mobilen Endgeräteeinrichtung repräsentierendes Piktogramm anzuzeigen.

8. Verfahren gemäß Anspruch 1 oder 2, wobei Schritt (b) den Schritt des Konvertierens des Bildes in ein digitales als ein MPEG-I-Rahmen formatiertes Bild aufweist.

9. Verfahren gemäß einem der vorhergehenden Ansprüche, weiter aufweisend die Schritte:
Empfangen am digitalen Rundfunkempfänger eines zweiten Bildes von einer Endgeräteeinrichtung über eine drahtgebundene Kommunikationsverbindung;
Speichern des zweiten Bildes im Speichermodul.

10. Verfahren gemäß einem der vorhergehenden Ansprüche, wobei Schritt (b) aufweist den Schritt des Speicherns des Bildes in ein im Speichermodul gepflegten Album.

11. Verfahren gemäß Anspruch 10, weiter aufweisend den Schritt des Sendens an eine mit dem digitalen Rundfunkempfänger verbundene Anzeigeeinrichtung eines Signals, um ein das Album auf einer Anwenderschnittstelle repräsentierendes Piktogramm anzuzeigen.

12. Verfahren gemäß Anspruch 11, weiter aufweisend die Schritte:
Empfangen einer anwendererzeugten Auswahl des Album-Piktogramms; und
Senden an die Anzeigeeinrichtung eines Signals, um im Album gespeicherten Bildern zugeordnete Optionen anzuzeigen.

13. Verfahren gemäß einem der vorhergehenden Ansprüche, wobei der eine oder die mehreren zugeordneten Übertragungskanäle Audio-Kanäle aufweisen.

14. Computerausführbare Befehle, die sobald sie durch eine Computereinrichtung ausgeführt werden, diese steuern, das Verfahren eines der vorhergehenden Ansprüche auszuführen.

15. Computerlesbares Medium, das die computerausführbaren Befehle gemäß Anspruch 14 speichert.

16. Digitaler Rundfunkempfänger aufweisend:
eine zentrale Verarbeitungseinheit (122);
eine Video-Decodiereinrichtung (116); und
ein Speichermodul (124), das mit der zentralen Verarbeitungseinheit gekoppelt ist und computerausführbare Befehle enthält, die den Empfänger veranlassen, die Schritte auszuführen:
(a) Empfangen eines Bildes von einer mobilen Endgeräteeinrichtung (127) über eine drahtlose Nahbereichskommunikationsverbindung;
(b) Speichern des Bildes im Speichermodul;
(c) Empfangen eines digitalen eine Vielzahl von Übertragungskanälen aufweisenden Rundfunkeingabestroms;
(d) Empfangen einer das Bild einem oder mehreren der Übertragungskanäle zuordnenden Anwendereingabe;
(e) Abrufen des Bildes zum Anzeigen auf einer Anzeigeeinrichtung, wenn der Empfänger auf einen der dem Bild zugeordneten Übertragungskanäle eingestellt ist; und
(f) Ausgeben an der Video-Decodiereinrichtung eines formatierten Ausgabevideosignals basierend auf dem Bild zum Anzeigen auf der Anzeigeeinrichtung, wenn der Empfänger auf einen der dem Bild zugeordneten Übertragungskanäle eingestellt ist.

17. Digitaler Rundfunkempfänger gemäß Anspruch 16, wobei das Speichermodul weitere computerausführbare Befehle aufweist, die den Empfänger weiter veranlassen, die Schritte durchzuführen:
(g) Senden an die Anzeigeeinrichtung eines Signals, um dem Bild zugeordnete Optionen anzuzeigen, wobei die Optionen eine Option zum Speichern des Bildes im Speicher umfassen; und
(h) in Reaktion auf (g) Empfangen einer anwendererzeugten Auswahl einer der Optionen.

18. Digitaler Rundfunkempfänger gemäß Anspruch 16 oder 17, wobei der Nahbereichstransceiver einen Bluetooth-Transceiver aufweist.

19. Digitaler Rundfunkempfänger gemäß einem der Ansprüche 16 bis 18, wobei der eine oder die mehreren zugeordneten Übertragungskanäle Audio-Kanäle umfassen.

## Revendications

1. Procédé d'exploitation d'un récepteur de radiodiffusion numérique comprenant un module de mémoire, le procédé comprenant :
(a) la réception au niveau du récepteur de radiodiffusion numérique d'une image en provenance d'un dispositif terminal mobile via une liaison de communication sans fil à courte portée ;
(b) le stockage de l'image dans le module de mémoire ;
(c) la réception d'un flux d'entrée de radiodiffusion numérique comprenant une pluralité de canaux de transmission ;
(d) la réception d'une entrée d'utilisateur associant l'image à un ou plusieurs des canaux de transmission ;
(e) la récupération de l'image pour l'affichage sur un dispositif d'affichage lorsque le récepteur est accordé sur un des canaux de transmission associés à ladite image ; et
(f) la sortie d'un signal vidéo de sortie formaté sur la base de l'image à afficher sur le dispositif d'affichage lorsque le récepteur est accordé sur un des canaux de transmission associés à l'image.

2. Procédé selon la revendication 1, dans lequel la liaison de communication sans fil à courte portée comprend une liaison BLUETOOTH.

3. Procédé selon la revendication 1 ou la revendication 2, dans lequel l'étape (a) comprend les étapes consistant à :
(1) recevoir une demande de connexion de la part du dispositif terminal mobile ;
(2) envoyer au dispositif d'affichage un signal pour afficher une indication de la demande de connexion en provenance du terminal ;
(3) recevoir un assentiment généré par l'utilisateur pour la demande de connexion ;
(4) établir une connexion entre le récepteur de radiodiffusion numérique et le dispositif terminal mobile ; et
(5) recevoir l'image en provenance du dispositif terminal mobile.

4. Procédé selon la revendication 3, dans lequel l'étape (a) comprend en outre les étapes consistant à :
(6) envoyer au dispositif d'affichage un signal pour afficher des options associées à l'image, les options comprenant une option pour sauvegarder l'image dans le module de mémoire ; et
(7) en réponse à (6), recevoir une sélection générée par l'utilisateur d'une des options.

5. Procédé selon l'une quelconque des revendications 3 à 4, comprenant en outre l'étape consistant à convertir l'image en une image numérique formatée dans une trame I MPEG.

6. Procédé selon l'une quelconque des revendications 3 à 5, dans lequel l'image reçue du dispositif terminal mobile comprend une trame I MPEG.

7. Procédé selon l'une quelconque des revendications 3 à 5, comprenant en outre l'étape consistant à (6) tant que le dispositif terminal mobile maintient une connexion avec le récepteur de radiodiffusion numérique, envoyer au dispositif d'affichage un signal pour afficher une icône représentant la connexion avec le dispositif terminal mobile.

8. Procédé selon la revendication 1 ou la revendication 2, dans lequel l'étape (b) comprend l'étape consistant à convertir l'image en une image numérique formatée dans une trame I MPEG.

9. Procédé selon l'une quelconque des revendications précédentes, comprenant en outre les étapes consistant à :
recevoir au niveau du récepteur de radiodiffusion numérique une seconde image en provenance d'un dispositif terminal via une liaison de communication filaire ;
stocker la seconde image dans le module de mémoire.

10. Procédé selon l'une quelconque des revendications précédentes, dans lequel l'étape (b) comprend l'étape consistant à stocker l'image dans un album maintenu à l'intérieur du module de mémoire.

11. Procédé selon la revendication 10, comprenant en outre l'étape consistant à envoyer à un dispositif d'affichage connecté au récepteur de radiodiffusion numérique un signal pour afficher une icône représentant l'album sur une interface utilisateur.

12. Procédé selon la revendication 11, comprenant en outre les étapes consistant à :
recevoir une sélection générée par l'utilisateur de l'icône de l'album ; et
envoyer au dispositif d'affichage un signal pour afficher des options associées aux images stockées dans l'album.

13. Procédé selon l'une quelconque des revendications précédentes, dans lequel les un ou plusieurs canaux de transmission associés comprennent des canaux audio.

14. Instructions exécutables par ordinateur qui lorsque exécutées par l'appareil informatique le commandent pour effectuer le procédé selon l'une quelconque des revendications précédentes.

15. Support lisible par ordinateur stockant les instructions exécutables par ordinateur selon la revendication 14.

16. Récepteur de radiodiffusion numérique comprenant:
une unité centrale de traitement (122) ;
un encodeur vidéo (116) ; et
un module de mémoire (124) couplé à l'unité centrale de traitement et contenant des instructions exécutables par ordinateur qui amènent le récepteur à effectuer les étapes consistant à :
(a) recevoir une image en provenance d'un dispositif terminal mobile (127) via une liaison de communication sans fil à courte portée ;
(b) stocker l'image dans le module de mémoire ;
(c) recevoir un flux d'entrée de radiodiffusion numérique comprenant une pluralité de canaux de transmission ;
(d) recevoir une entrée d'utilisateur associant l'image à un ou plusieurs des canaux de transmission ;
(e) récupérer l'image pour l'affichage sur un dispositif d'affichage lorsque le récepteur est accordé sur un des canaux de transmission associés à ladite image ; et
(f) sortir au niveau de l'encodeur vidéo un signal vidéo de sortie formaté sur la base de l'image à afficher sur le dispositif d'affichage lorsque le récepteur est accordé sur un des canaux de transmission associés à l'image.

17. Récepteur de radiodiffusion numérique selon la revendication 16, dans lequel le module de mémoire comprend d'autres instructions exécutables par ordinateur qui amènent le récepteur à effectuer d'autres étapes consistant à :
(g) envoyer au dispositif d'affichage un signal pour afficher des options associées à l'image, les options comprenant une option pour sauvegarder l'image dans la mémoire ; et
(h) en réponse à (g), recevoir une sélection générée par l'utilisateur d'une des options.

18. Récepteur de radiodiffusion numérique selon la revendication 16 ou 17, dans lequel l'émetteur-récepteur à courte portée comprend un émetteur-récepteur Bluetooth.

19. Récepteur de radiodiffusion numérique selon l'une quelconque des revendications 16 à 18, dans lequel les un ou plusieurs canaux de transmission associés comprennent des canaux audio.
